# EUROPEAN PATENT SPECIFICATION

(11) **EP 1 965 561 B1**
(45) Date of publication and mention of the grant of the patent: **21.03.2012**
(21) Application number: 08002448.2
(22) Date of filing: 11.02.2008
(51) Int. Cl.: H04N 7/173

(54) **System and method for transmitting digital content using cable modem termination system (CMTS) bypass architecture**
System und Verfahren zur Übermittlung von digitalem Dateninhalt unter Verwendung einer Nebenleitungsarchitektur für Kabelmodemabschlusssysteme
Système et procédé de transmission de contenu numérique en utilisant une architecture de dérivation de système de terminaison de modem à câble (CMTS)

(30) Priority: 28.02.2007 US 892070 P; 05.10.2007 US 868194
(43) Date of publication of application: 03.09.2008
(73) Proprietor: General instrument Corporation, Horsham PA 19044 (US)
(72) Inventor: Joyce, Gerald R., Newton Massachusetts 02465 (US); Brown, Christopher W., Warrington Pennsylvania 18976 (US); Patrick, Michael W., Assonet Massachusetts 02702 (US)
(74) Representative: Openshaw, Paul Malcolm

(56) References cited:
- US-A1- 2003 066 087
- US-A1- 2005 123 001

## Description

### BACKGROUND OF THE INVENTION

### Field of the Invention

The invention relates to the delivery of digital content, such as Internet Protocol Television (IPTV) video content, over cable systems using a standard protocol Data Over Cable System Interface Specification (DOCSIS). More particularly, the invention relates to transmitting digital content within systems involving Cable Modem Termination System (CMTS) architecture and processing.

### Description of the Related Art

Most cable systems currently provide video (and data) content delivery services via digital broadcast. The video image is first digitized, and then compressed, e.g., via one of several digital algorithms or compression standards, such as the MPEG2 (Moving Pictures Expert Group) algorithm or the MPEG4 part 10 algorithm, where the latter also is known as the International Telecommunications Union (ITU) H.264 standard. These compression standards allow the same video content to be represented with fewer data bits. Using MPEG2, standard definition television currently can be transmitted at a rate of approximatety 4 Megabits per second (Mbps). Using MPEG 4 Part 10, the same video content can be transmitted at a rate of approximately 2 Mbps. The digital video content typically is transmitted from a source at the cable headend to the end user's set-top box (or other suitable video processing device) via a digitally modulated radio frequency (RF) carrier, with the video content organized into a format known as an MPEG2 Transport Stream (MPEG2-TS).

Cable system operators are considering Internet Protocol (IP) -based methods for content delivery, such as IP-video and IP Television (IPTV), to supplement their current digital video delivery methods. The internet protocol is not required for MPEG2 Transport Streams. However, IP-based video delivery allows the possibility of new video sources, such as the Internet, and new video destinations, such as end user IPTV playback devices. If cable systems do include IP-based content delivery, it is quite possible and likely that relatively large amounts of bandwidth will be needed to deliver IPTV content to end users. Moreover, as end users continue to shift their viewing desires toward on-demand applications, a relatively large percentage of such on-demand content likely will be IPTV content.

To cope with the anticipated surge of IPTV viewing, the cable industry developed the Data Over Cable System Interface Specification (DOCSIS^{®}) standard or protocol, including the DOCSIS 3.0 standard. In general, DOCSIS defines interface requirements for cable modems involved in high-speed data distribution over cable television system networks. The cable industry also developed the Cable Modem Termination System (CMTS) architecture and the Modular CMTS (M-CMTS^{™}) architecture for this purpose. In general, a CMTS is a component, typically located at the headend or local office of a cable television company, that exchanges digital signals with cable modems on a cable network.

In general, an EdgeQAM (EQAM) or EQAM modulator is a headend or hub device that receives packets of digital content, such as video or data, re-packetizes the digital content into an MPEG transport stream, and digitally modulates the digital transport stream onto a downstream RF carrier using Quadrature Amplitude Modulation (QAM). EdgeQAMs are used for both digital broadcast, and DOCSIS downstream transmission. In a conventional IPTV network system arrangement using M-CMTS architecture, the EdgeQAMs are downstream DOCSIS modulators, and are separated from a core portion of the M-CMTS core. An IPTV server or other suitable content provider is coupled to a regional area or backbone network. This backbone network, in turn, is connected to a converged interconnect network (CIN) which also links the M-CMTS core and the EdgeQAMs. The CIN performs as one or more access routers, i.e., devices configured for routing data in an IP network. There is a Layer Two Tunneling Protocol version 3 (L2TPv3) tunnel from the M-CMTS core to the EdgeQAMs, this tunnel being identified as a Downstream External Physical Interface (DEPI). The IP-video is carried on the downstream DOCSIS RF carrier from the EdgeQAM to the end user video or multimedia content processing device, such as a DOCSIS set-top box or an Internet Protocol set-top box (IP-STB). An IP set-top box is a set-top box or other multimedia content processing device that can use a broadband network to connect to television data channels, video streams and other multimedia content. An upstream DOCSIS receiver is coupled to and receives data, such as on-demand commands, from the end user multimedia content processing device. Upstream DOCSIS receivers are combined with or contained within a core portion of the M-CMTS component.

Since the upstream DOCSIS receivers are combined with, or comprise a part of, the M-CMTS core and its processing, all packets traveling upstream or downstream typically travel through the M-CMTS core for appropriate forwarding to the correct network interface or DOCSIS carrier. However, since the downstream DOCSIS modulators (i.e., the EQAMs) are separate from the M-CMTS core, the downstream packets travel from the M-CMTS core, through the CIN, and to the EQAMs on special "tunnel" or "pseudo-wire" connections. These tunnels, which are defined by the Layer Two Tunneling Protocol (L2TP) version 3 (i.e., L2TPv3), are known within the DOCSIS 3.0 standard as Downstream External Physical Interface (DEPI) tunnels, and typically are in the form of gigabit Ethernet fiber links.

One of the features of the DOCSIS 3.0 specification intended to facilitate the use of IPTV content delivery is that the number of downstream EQAMs can be increased independently of the number of upstream DOCSIS data channels. Hence, the downstream DOCSIS capacity can be arbitrarily increased to whatever bandwidth is needed. However, as discussed, downstream IPTV content or data packet flow from the IPTV server to the end user DOCSIS set-top box conventionally is required to travel on a DEPI tunnel, from the M-CMTS core, then back through the CIN, and on to the EQAM. Such "hairpin" forwarding of downstream data packets back through the CIN requires a disproportionate amount of switching bandwidth and other resources compared to other portions of the system.

US 2003/066087 A1 discloses hybrid distributed cable modem termination systems having mini fiber nodes containing CMTS modulators remotely located from the head end. DOCSIS MAC layer components are located at the head end. This lowers cost and allows use of a smaller mFN enclosure. The mFN has A/D converters for DOCSIS upstream traffic and for legacy upstream traffic. A multiplexer using forward error correction combines the legacy and DOCSIS traffic for upstream transmission along a single fiber at rates of approximately 2 Gbps. A splitter at the head end routes legacy traffic to legacy equipment and the DOCSIS traffic to the MAC layer components. A single power supply at the head end can be used to power the mFNs. US 2005/123001 A1 discloses a device that receives packets associated with a program stream at an addressable communications port, and assigns them to one of a plurality of QAM channels. Multiplexed program packets, DOCSIS data or multimedia packets or a combination of both, are transmitted over the QAM channel. DSG messaging transports requests for content to a server, transports queries to mapping tables and returns information from the tables to a manager that, along with processors, determine which channel to use for downstream transport of the multiplexed streams.

### SUMMARY OF THE INVENTION

The invention defines a method according to claim 1 and a system according to claim 8. Various further embodiments are defined in the dependent claims.

### BRIEF DESCRIPTION OF THE DRAWINGS

FIG. 1 is a block diagram of a conventional Internet Protocol television (IPTV) digital content delivery system, including a conventional modular Cable Modem Termination System (M-CMTS) network;

FIG. 2 is a block diagram of an IPTV digital content delivery system, including the DOCSIS IP-video Bypass Architecture (DIBA), in which the digital content bypasses the M-CMTS core;

FIG. 3 is a block diagram of an IPTV digital content delivery system with an integrated M-CMTS network, also including the DOCSIS IP-video Bypass Architecture (DIBA), in which the digital content bypasses an integrated CMTS;

FIG. 4 is a block diagram of an IPTV digital content delivery system, including M-CMTS bypass architecture, and using a Packet Stream Protocol (PSP) data encapsulation technique;

FIG. 5 is a block diagram of the data encapsulations at various stages in the IPTV digital content delivery system of FIG. 4;

FIG. 6 is a block diagram of an IPTV digital content delivery system, including M-CMTS bypass architecture, and using a Single Program Transport Stream (SPTS) data encapsulation technique, in which additional DIBA encapsulation is not added by the IPTV server but by an IPTV interceptor;

FIG. 7 is a block diagram of the data encapsulations at various stages in the IPTV digital content delivery system of FIG. 6;

FIG. 8 is a block diagram of an IPTV digital content delivery system, including M-CMTS bypass architecture, and using an alternative Packet Stream Protocol (PSP) data encapsulation technique;

FIG. 9 is a block diagram of the data encapsulations at various stages in the IPTV digital content delivery system of FIG. 8;

FIG. 10 is a block diagram of an IPTV digital content delivery system, including M-CMTS bypass architecture, and using an MPEG Transport (MPT) data encapsulation technique;

FIG. 11 is a block diagram of the data encapsulations at various stages in the IPTV digital content delivery system of FIG. 10;

FIG. 12 is a block diagram of an IPTV digital content delivery system, including M-CMTS bypass architecture, and using an alternative Single Program Transport Stream (SPTS) data encapsulation technique, in which the encapsulation out of the IPTV server is conventional MPEG2/IP, there is no DEPI tunnel, and the EdgeQAM itself adds DOCSIS encapsulations;

FIG. 13 is a block diagram of the data encapsulations at various stages in the IPTV digital content delivery system of FIG. 12; and

FIG. 14 is a flow chart that schematically illustrates a method for delivering IPTV digital content using M-CMTS bypass architecture.

### DETAILED DESCRIPTION

In the following description, like reference numerals indicate like components to enhance the understanding of the system bypass architecture and corresponding data transmission methods through the description of the drawings. Also, although specific features, configurations and arrangements are discussed herein below, it should be understood that such specificity is for illustrative purposes only. A person skilled in the relevant art will recognize that other steps, configurations and arrangements are useful without departing from the scope of the invention.

The methods and systems described herein involve direct tunneling of digital content, such as IPTV video content, from a content source to a downstream modulator, such as a downstream Edge QAM (EQAM), in a manner that bypasses the modular Cable Modem Termination System (M-CMTS), including the M-CMTS core. In conventional system arrangements that use an M-CMTS, downstream IPTV content travels from the IPTV source or server to the converged interconnect network (CIN), via a regional area network, and then to the M-CMTS and the M-CMTS core. The IPTV content then travels back through the CIN and then to the downstream DOCSIS modulator (e.g., the EQAM) using a special "tunnel" or "pseudo-wire" connection, such as a Downstream External Physical Interface (DEPI) tunnel. By tunneling content directly to the downstream modulators, the bypass methods and systems described herein require or involve fewer M-CMTS components and less CIN switching bandwidth than conventional system arrangements. In this manner, the cost savings involved in bypassing relatively expensive CMTS components allows content providers to deliver relatively high-bandwidth content, such as IPTV video content, to end users at a cost that is comparable to the delivery of conventional video content using MPEG2 and other conventional content transmission methods.

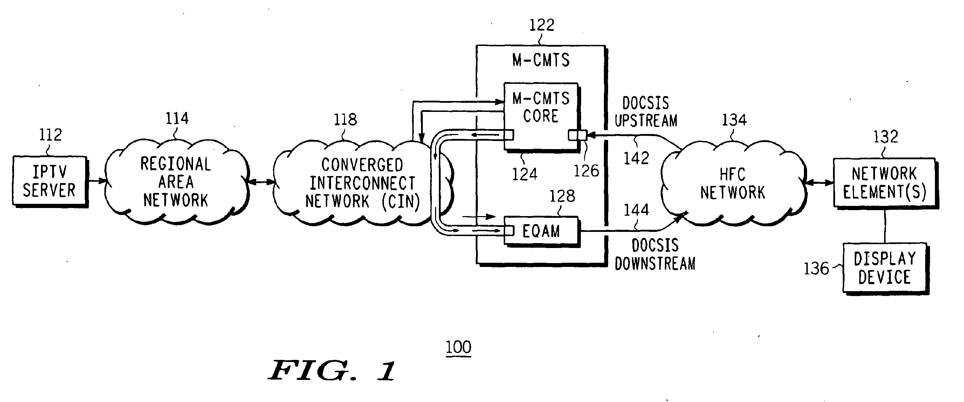

Referring now to FIG. 1, shown is a block diagram of a conventional Internet Protocol television (IPTV) digital content delivery system 100 including a conventional modular Cable Modem Termination System (M-CMTS) network arrangement. The system 100 includes a source or server 112 for providing IPTV content. The IPTV server 112 can be any suitable transmission source for providing IPTV content, such as a storage device, an incoming satellite link, or an Internet-based IPTV content provider. The IPTV server 112 is connected to a regional area or backbone network 114. The regional area network 114 can be any communication network or network server arrangement suitable for transmitting IPTV content. For example, the regional area network 114 can be or include the Internet or an Internet protocol (IP) -based network, a computer network, a web-based network or other suitable wired or wireless network or network system.

Coupled to the regional area network 114 is a converged interconnect network (CIN) 118, which includes the routing and switching capability for connecting the regional area network 114 to a Cable Modem Termination System (CMTS), such as a modular CMTS (M-CMTS) 122. In general, as discussed hereinabove, the CIN typically performs as an access router for routing data in an IP network. The CIN typically has gigabit Ethernet interfaces and can perform layer 2/3/4 forwarding, i.e., routing of data in layers 2, 3 and 4 as defined according to the seven-layer Open Systems Interconnection (OSI) network protocol. In general, a CMTS or an M-CMTS is a component that exchanges digital signals with network elements (such as cable modems, set-top boxes and other content processing devices, and media terminal adapters) on a cable network. The CMTS or M-CMTS typically is located at the local office of a cable television company.

The M-CMTS 122 includes an M-CMTS core 124, which typically includes or contains one or more upstream receivers 126, such as an upstream DOCSIS receiver. The M-CMTS 122 also includes one or more downstream DOCSIS modulators, such as one or more EdgeQAMs (EQAMs) 128, which are external to and not part of the M-CMTS core 124. The M-CMTS 122 typically is connected to one or more network elements 132, such as an end user cable modem, a set-top box and/or a media terminal adapter (MTA). The M-CMTS 122 typically is connected to the network elements 132 via an end user network, which typically is Hybrid Fiber Coaxial (HFC) cable network 134 and/or other suitable end user network or network system.

The upstream receiver 126 is configured to receive upstream IP/DOCSIS transmissions, such as on-demand commands from an end user set-top box. The upstream data is transmitted to the upstream receiver 126 via the network 134 and an upstream data channel 142 coupled between the network 134 and the upstream receiver 126. The M-CMTS core 124, which includes the upstream receiver 126, converts the received upstream data to Internet Protocol (IP) packets, which then are sent to an IP router, or other suitable device or component, for transmission across the CIN 118 and the regional area network 114. For downstream data, the M-CMTS 122 uses one or more EQAMs 128 or other suitable downstream modulators to convert the IP packet data to a DOCSIS formatted transport stream or other suitable digital transport stream and modulate the digital transport stream onto a downstream RF carrier using Quadrature Amplitude Modulation (QAM) to the network elements 132. The downstream data is transmitted from the EQAM 28 to the network elements 132 via the network 134 and a downstream data channel 144 coupled between the EQAM 128 and the network 134.

One or more of the components within the M-CMTS 122, including one or more of the M-CMTS core 124, the upstream receiver 126 and the EQAM 128 can be comprised partially or completely of any suitable structure or arrangement, e.g., one or more integrated circuits. Also, it should be understood that the M-CMTS 122 includes other components, hardware and software (not shown) that are used for the operation of other features and functions of the M-CMTS 122 not specifically described herein. Also, the M-CMTS 122 can be partially or completely configured in the form of hardware circuitry and/or other hardware components within a larger device or group of components. Alternatively, the M-CMTS 122 can be partially or completely configured in the form of software, e.g., as processing instructions and/or one or more sets of logic or computer code. In such configuration, the logic or processing instructions typically are stored in a data storage device (not shown). The data storage device typically is coupled to a processor or controller (not shown). The processor accesses the necessary instructions from the data storage device and executes the instructions or transfers the instructions to the appropriate location within the M-CMTS 122.

A DOCSIS 3.0 cable modem and other network elements are able to receive multiple downstream channels 144. According to the DOCSIS 3.0 standard, there may be "primary" and "non-primary" downstream channels. Of these, one and only one will be the network elements' "primary" downstream channel. The network elements will only receive synchronization time-stamps, which are necessary for upstream operation and which are known as SYNC messages, on its primary downstream channel. Thus, the "primary" channel is also a "synchronized" channel. The network elements also rely on the "primary" channel for the delivery of Mac Domain Descriptor (MDD) messages, which enable the network elements to perform operations including plant topology resolution and initial upstream channel selection. During initialization, the network elements are only required to receive Upstream Bandwidth Allocation Maps (MAPs) and Upstream Channel Descriptors (UCDs) on its "primary" downstream channel.

In systems using M-CMTS architecture, the IP data packets traveling upstream or downstream typically travel through the M-CMTS core 124 for appropriate processing and subsequent forwarding to the correct network interface or data carrier, such as a DOCSIS carrier. Since the upstream receiver 126 is combined with the M-CMTS core 24 and its processing, upstream data received by the upstream receiver 126 can be transmitted directly from the upstream receiver 126 to the M-CMTS core 124 and then forwarded appropriately. However, since the downstream modulator (EQAM 128) is not part of the M-CMTS core 124, downstream data received by the M-CMTS 122 from the CIN 118 travels first through the M-CMTS core 124 for appropriate processing and then is directed to the EQAM 128 for appropriate conversion and modulation: Downstream data packets from the M-CMTS core 124 conventionally must travel back through the CIN 118 and then to the EQAM 128 using special "tunnel" or "pseudo-wire" connections, such as downstream or DOCSIS Downstream External Physical Interface (DEPI) tunnels. As discussed hereinabove, such "hairpin" forwarding from the M-CMTS core 124 back through the CIN 118 to the EQAM 128 will require a disproportionate amount of switching bandwidth for the M-CMTS core 124 and the CIN 118.

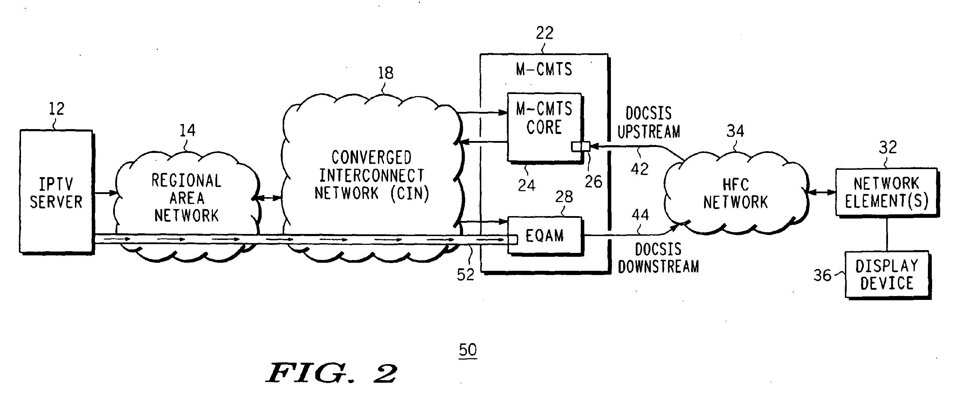

Referring now to FIG. 2, shown is a block diagram of an IPTV digital content delivery system 50 including M-CMTS bypass architecture in accordance with the principles of the invention. In the system 50, downstream content or traffic travels directly from an IPTV server 12 to an EQAM 28, e.g., via a regional area network 14 and a CIN 18, thus bypassing a M-CMTS 22 and its M-CMTS core 24. The downstream content travels directly to the EQAM 28 using one or more suitable connections (shown generally as a connection 52). For example, the connection 52 can be one or more "tunnel" or "pseudo-wire" connections, such as a DEPI tunnel. As will be discussed in greater detail hereinbelow, content that is tunneled or otherwise transmitted directly from the IPTV server 12 to the EQAM 28 emerges from the EQAM 28 with partial or full DOCSIS framing, suitable for forwarding through to DOCSIS-compatible end user network elements, such as an end user cable modem that is DOCSIS-compatible. In general, the system 50 accomplishes the functionality of an M-CMTS without the associated cost. The M-CMTS does allow the adding of corresponding EQAMs to the system without having to increase the number of upstream data channels, lending some flexibility. However, the bypass architecture provides the additional advantage of allowing additional EQAMs 28, without having to add additional processing capacity to the M-CMTS core 24, or the CIN 18, which is relatively expensive.

Also, alternatively, M-CMTS bypass architecture can be used in systems that include an integrated CMTS, rather than a more expensive M-CMTS. In this manner, the bypass architecture makes it possible to deploy an integrated CMTS with additional external DEPI EQAMs. The integrated CMTS includes a "synchronized" or "primary" downstream DOCSIS data channel from the integrated CMTS to the end user network elements, in addition to the downstream DOCSIS data channels from the EQAM to the end user network elements, which may be "synchronized" or "non-synchronized."

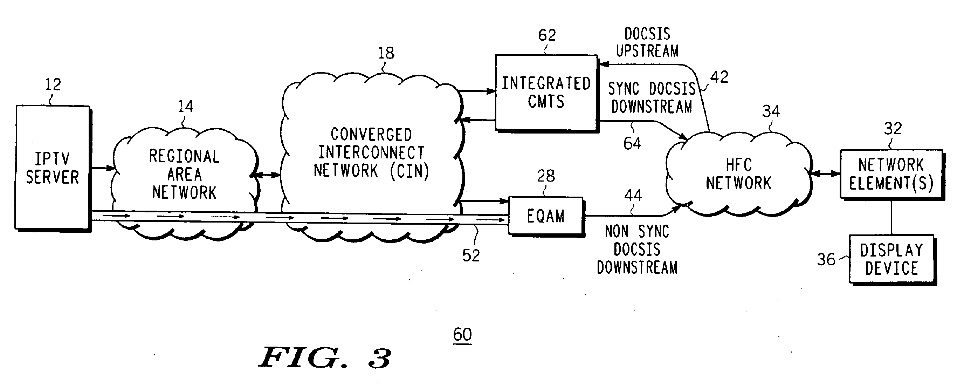

Referring now to FIG. 3, shown is a block diagram of an IPTV digital content delivery system 60 including an integrated M-CMTS, and including M-CMTS bypass architecture. The system 60 includes an integrated CMTS 62, which differs from an M-CMTS in that it also includes a downstream DOCSIS data channel 64 coupled to end user network elements 32, via the HFC network 34. Network elements 32 can include one or more end user network elements, such as a cable modem, a set-top box and/or a media terminal adapter (MTA). The downstream DOCSIS data channel 64 is fully functional, containing synchronization timestamps, and thus is considered to be "primary" or "synchronized." By comparison, the downstream DOCSIS data channel 44 from the EQAM 28 to the network elements 32 (via the HFC network 34), which carries the IPTV content, can be configured to operate without synchronization timestamps, and thus may, in that case, be considered to be "non-synchronized."

Because IPTV content can be delivered to DOCSIS cable modems and other network elements 32 using non-synchronized downstream data channels, the EQAM 28 can be used to deliver IPTV content, even when the EQAM 28 is not synchronized to the DOCSIS master clock with the DOCSIS Timing Interface (DTI) (not shown), which is part of the integrated CMTS 62. DOCSIS modems require DOCSIS master clock synchronization on only one synchronized data channel, the so-called "primary" downstream data channel. Therefore, such synchronization can be supplied by the integrated CMTS 62, via the "synchronized" downstream DOCSIS data channel 64. Alternatively, such synchronization can be supplied by a single M-CMTS EQAM that is synchronized to the DOCSIS master clock with the DOCSIS DTI.

By using the CMTS bypass architecture, the system 60 avoids the expense of the CMTS or the M-CMTS having to establish or generate both synchronized and non-synchronized downstream data channels for delivery of IPTV content. A single synchronized data channel from the integrated CMTS 62 or its core can provide the synchronization timestamps, and also provide other DOCSIS Media Access Control (MAC) functions, including instructing the network elements 32 when to transmit upstream and delivering other MAC layer messages for various network element functions, such as registration and maintenance. One or more non-synchronized DOCSIS data channels can be established or generated for one or more EQAMs 28. A non-synchronized DOCSIS data channel generated for an EQAM is less expensive than generating a synchronized DOCSIS data channel for an integrated CMTS or an M-CMTS. Also, with an integrated CMTS and no timestamps in the non-synchronized data channel, the DTI (which is required in the M-CMTS architecture) is not necessary in systems using CMTS bypass architecture.

Depending on the content source 12, the.regional area network 14 and the CIN 18, as well as the type of EQAM 28, IPTV content delivery systems using CMTS bypass architecture can use many different tunneling techniques and therefore have many suitable bypass data encapsulations. Data encapsulation generally is the process of taking a packet of a particular format that contains data as its payload, and enveloping or encapsulating that entire packet as the payload of a new packet. The new packet is generally formed by adding additional header fields, of a different format, to the old packet, which becomes the payload. The outermost header must be compatible with the device receiving the data. If the EQAM 28 is an M-CMTS DEPI EQAM (DEPI EQAM), data encapsulation can occur using at least two DEPI tunneling techniques. Using either tunneling technique, the content source 12 generates or originates an L2TPv3 (DEPI) tunnel to the DEPI EQAM. In the first DEPI tunneling technique, known as the DOCSIS Packet Stream Protocol (PSP), IPTV content is encapsulated into DOCSIS MAC frames or data packets, i.e., DOCSIS frames are transported in the L2TPv3 tunnel payload (data). In general, the PSP allows DOCSIS frames to be appended together in a queue, using either concatenation (to increase network performance) or fragmentation (if tunneled packets are too large). The PSP DEPI tunneling technique allows the EQAM 28 to mix both IPTV content originated from the IPTV server 12 with non-IPTV content, such as VOIP (Voice over Internet Protocol) data originated from the M-CMTS core 24, on the same DOCSIS downstream data carrier.

In the second DEPI tunneling technique, known as DOCSIS MPEG Transport (D-MPT), multiple 188-byte MPEG2 Transport Stream (MPEG-TS) packets are transported in the L2TPv3 tunnel payload. In D-MPT, IPTV content is encapsulated into DOCSIS MAC frames and the DOCSIS MAC frames are encapsulated into MPEG-TS packets. All DOCSIS frames, including packet-based frames and any necessary MAC management-based frames, are included within the one D-MPT data flow. The EQAM searches the D-MPT payload for any DOCSIS SYNC messages and performs SYNC corrections. The EQAM then forwards the D-MPT packet to the RF interface, for transmission on the RF data carrier. Using the D-MPT tunneling technique, MPEG packets can be received by the EQAM and forwarded directly to the RF interface without having to terminate and regenerate the MPEG framing. The only manipulation of the D-MPT payload is the SYNC correction.

Alternatively, the EQAM 28 can be a standard MPEG2 Transport Stream (MPEG2-TS) EQAM. If the EQAM 28 is an MPEG2-TS EQAM, the IPTV server 12 can transmit IPTV content in PSP formatted data packets. In such case, a PSP/MPT converter is used to convert the data format into an MPEG2-TS format, which an MPEG2-TS EQAM can process. The PSP/MPT converter can be attached to or embedded within the CIN 18 or one or more networking devices within the CIN 18. Alternatively, the IPTV server 12 can directly generate and transmit IPTV in MPT formatted data packets, which the MPEG2-TS EQAM can process.

In the case of non-synchronized DOCSIS data channels, e.g., the non-synchronized DOCSIS downstream data channel 44 in the system 60 shown in FIG. 3, a non-DOCSIS Program ID (PID) is used for packet identification. Otherwise, each D-MPT program would require a separate MPEG2 PID. To send multiple program streams of D-MPT data to the same downstream QAM data channel, the DOCSIS network elements (e.g., DOCSIS cable modems) should be programmed to accept D-MPT-formatted packets with other than the standard DOCSIS PID.

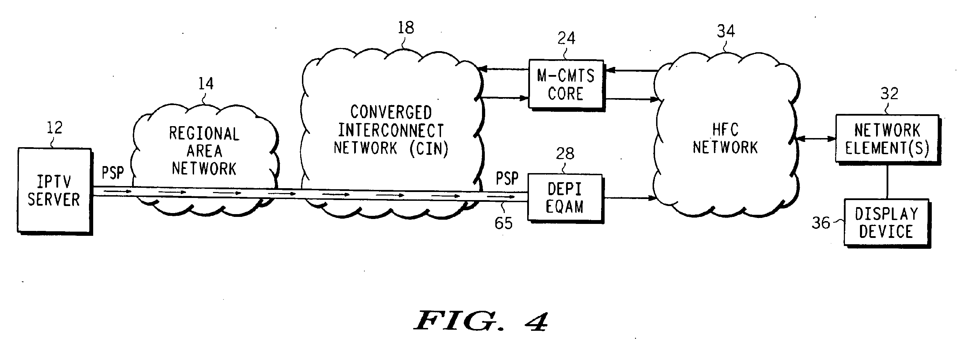

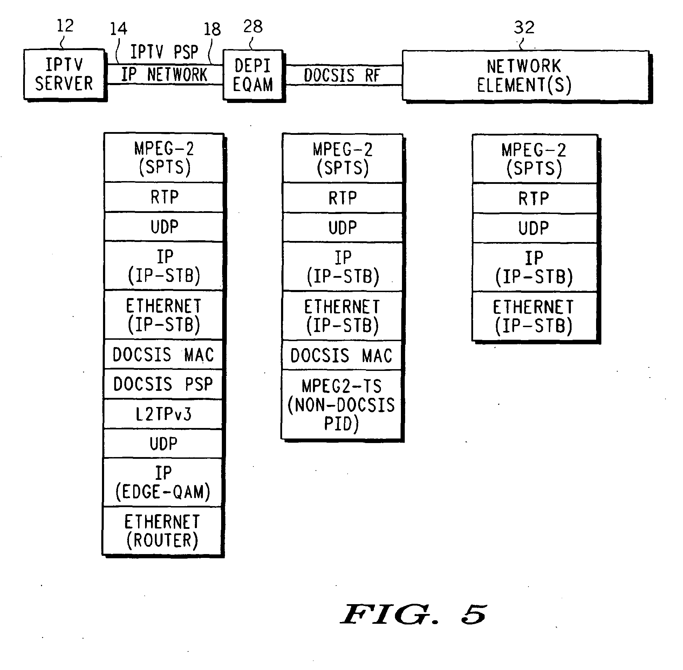

To describe these and other CMTS bypass architecture data format implementations, corresponding system diagrams are shown and described. Referring now to FIGs. 4 and 5, shown are a block diagram of an IPTV digital content delivery system, including M-CMTS bypass architecture, and using a Packet Stream Protocol (PSP) data encapsulation technique (FIG. 4) and a block diagram of the corresponding data encapsulations (FIG. 5) at various stages in the IPTV digital content delivery system of FIG. 4. Using the PSP data encapsulation technique, there is a L2TPv3 (DEPI) tunnel (shown generally as 65) from the IPTV server 12 directly to the EQAM 28, which, in this case, is a DEPI EQAM. Accordingly, the IPTV server 12 sends IPTV PSP data content directly to the DPI EQAM 28, via the regional area network 14 and the CIN 18.

The DEPI tunnel 65 carries the DOCSIS PSP data, in which the IPTV data is encapsulated into DOCSIS MAC frames. The PSP is a layer-3 convergence layer protocol, which allows packets to be consecutively streamed together and fragmented at arbitrary boundaries. The intent of the PSP mode is to facilitate Quality of Service. The PSP mode is to be used for transporting traditional DOCSIS data and signaling messages that use one or more Differentiated Services Code Point (DSCP) values. Each PSP flow is terminated, and the DOCSIS Frames within the flow are extracted. The DOCSIS frames are placed into corresponding output Quality of Service (QoS) queues. The queues are serviced-based upon the data forwarding behavior or per hop behavior (negotiated between the M-CMTS Core and EQAM) of the PSP flow, which carried the DOCSIS frames. The EdgeQAM places the resulting flow of DOCSIS frames into MPEG packets according to the requirements in the DOCSIS specification. The PSP allows the EQAM 28 to mix both IPTV traffic originated from the IPTV server 12 and non-IPTV frames (e.g., VOIP) from different sources.

The DEPI EQAM 28 terminates the DEPI tunnel 64, and inserts the DOCSIS SYNC messages. However, in some cases (e.g., with bonded data channels) the DEPI EQAM 28 can output a DOCSIS RF signal that does not carry timing information in the form of SYNC messages. Finally, the DEPI EQAM 28 does the encapsulation of the DOCSIS MAC messages into the MPEG2-TS format and generates the QAM carriers.

With respect to the corresponding data encapsulations shown in FIG. 5, it should be noted that the PSP tunneling implementation involves the IPTV server 12 encapsulating the Ethernet IP address and DOCSIS MAC header of the final destination network elements 32, as well as the IP address and L2TPv3 (DEPI) tunneling information of the EQAM 28. All of this information is known by the M-CMTS core 24, and is communicated to the IPTV server 12, e.g., by the M-CMTS 22.

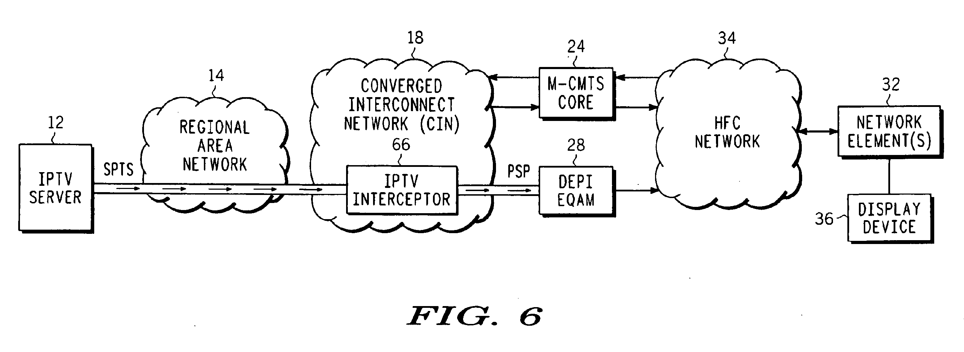

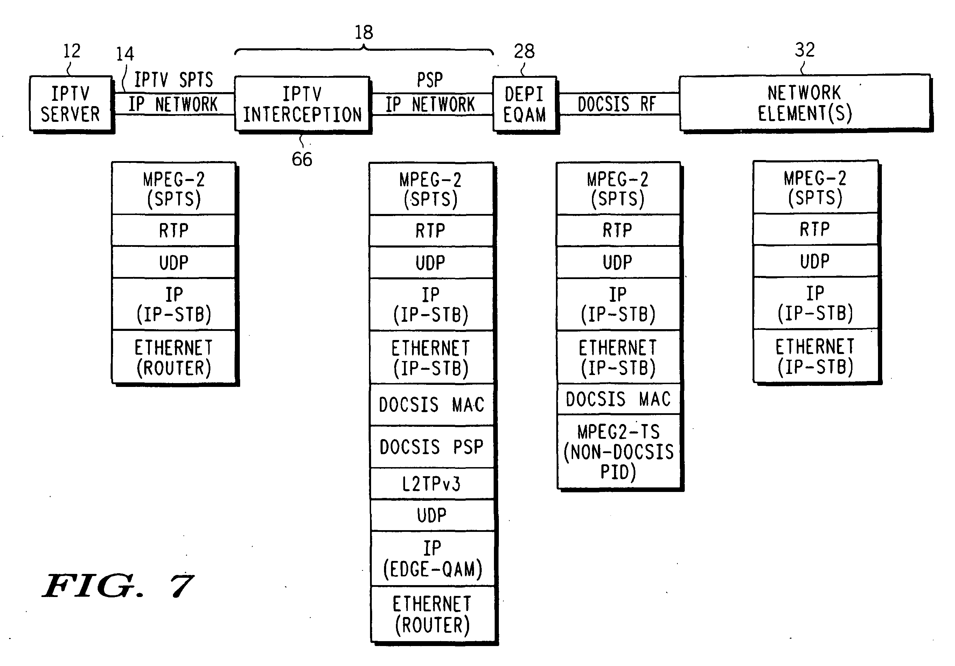

In an alternative data encapsulation technique, the IPTV server 12 is left unchanged and the IPTV data traffic from the IPTV server 12 is intercepted in the CIN 18 and converted to PSP for transmission to the EQAM 28. Referring now to FIGs. 6 and 7, shown are a block diagram of an IPTV digital content delivery system, including M-CMTS bypass architecture, and using a Single Program Transport Stream (SPTS) data encapsulation technique (FIG. 6) and a block diagram of the corresponding data encapsulations (FIG. 7) at various stages in the IPTV digital content delivery system of FIG. 6. In this data encapsulation technique, the IPTV server 12 transmits IPTV data in the MPEG2-TS format as an MPEG2 Single Program Transport Stream (SPTS). Data encapsulation is added, e.g., by an IPTV Interceptor (shown generally as 66) located in the CIN 18 (or coupled thereto), to convert the MPEG2 SPTS into a DOCSIS PSP data packet flow. The DOCSIS PSP data packet flow is terminated by the DEPI EQAM 28. Also, as discussed hereinabove, for non-synchronized DOCSIS data channels, a non-DOCSIS PID is used. It should be noted that, in using this data encapsulation technique, the RTP layer often is not necessary and generally is not used.

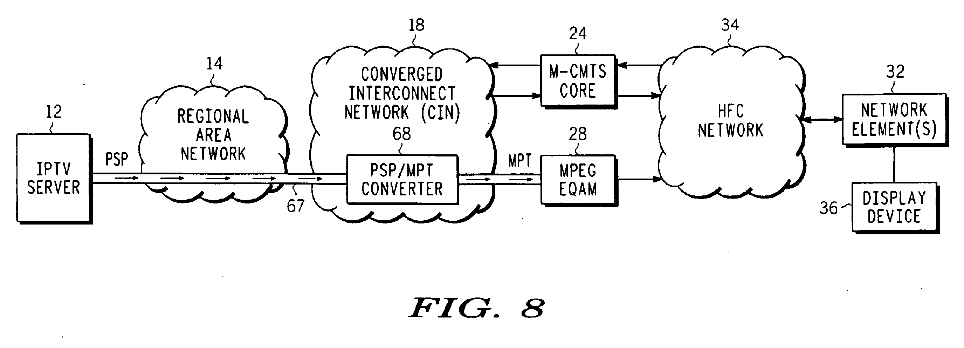

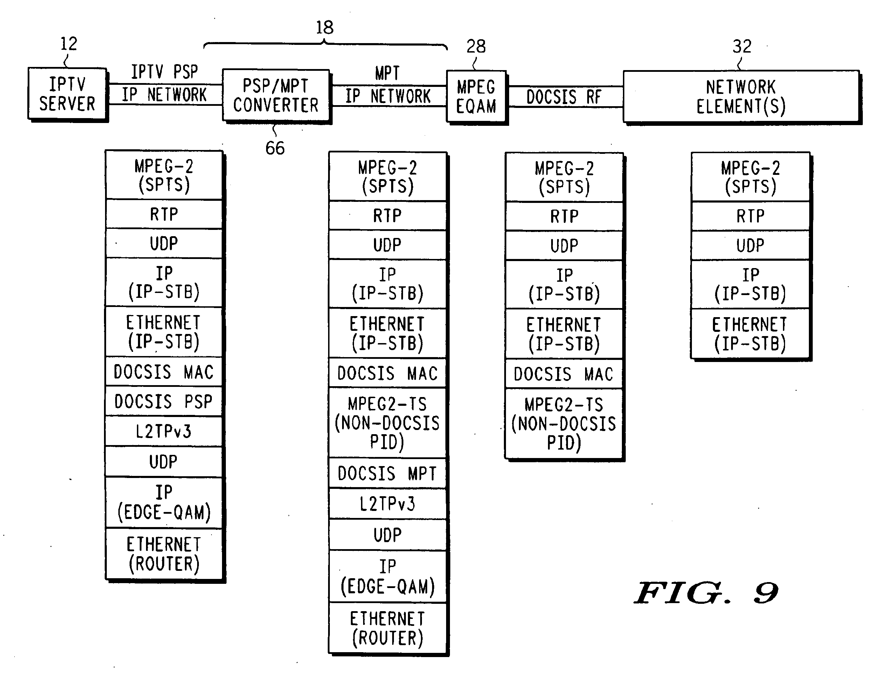

In another alternative data encapsulation technique, the IPTV data traffic from the IPTV server 12 is intercepted in the CIN 18 and converted to D-MPT for transmission to the EQAM 28, e.g., a non-DEPI, MPEG EQAM. Referring now to FIGs. 8 and 9, shown are a block diagram of an IPTV digital content delivery system, including M-CMTS bypass architecture, and using an alternative Packet Stream Protocol (PSP) data encapsulation technique (FIG. 8) and a block diagram of the corresponding data encapsulations (FIG. 9) at various stages in the IPTV digital content delivery system of FIG. 8. In this data encapsulation technique, the IPTV server 12 is modified to transmit data as an MPEG2 SPTS within a DOCSIS PSP format over an L2TPv3 (DEPI) tunnel (shown generally as 67). A PSP/MPT converter 68 located in or coupled to the CIN 18, converts the PSP data into an MPT format by adding DOCSIS MPEG2-TS framing. The EQAM 28 is modified (into an MPEG EQAM), e.g., by a software download, to terminate the L2TPv3 (DEPI) tunnel and remove the DOCSIS MPT sub-layer header from the received data. The modified (MPEG) EQAM 28 processes the remaining MPEG2-TS content, e.g., in a manner as discussed hereinabove. As shown in the data encapsulation (FIG. 9), the UDP/IP/Ethernet headers are removed and the MPEG2-TS data is transmitted from the modified (MPEG) EQAM 28 to the network elements 32 over an RF QAM carrier. Because the MPEG2-TS payload was a DOCSIS encapsulation of MPEG2 SPTS data, network elements 32, such as a cable modem (not shown) is able to decode the signal and send the remaining MPEG2 SPTS/RTP/UDP/IP data to other network elements, such as a set-top box (not shown). Again, in the case of non-synchronized DOCSIS data channels, a non-DOCSIS PID is used. Alternatively, this encapsulation approach can be performed without the L2TPv3 tunnel between the IPTV Server 12 and the PSP/MPT Converter 68 or between the PSP/MPT Converter 68 and the MPEG EQAM 28. For example, in non-DOCSIS, non-IP digital broadcast systems, and/or in systems configured to deploy non-DOCSIS, non-IP digital broadcasts, the content can be sent from the server to the EQAM as MPEG/UDP/IP data. The data comes out of the EQAM as an MPEG Transport Stream (no IP headers). In this manner, DOCSIS DEPI EQAMs can be modified or otherwise modified to receive content without the L2TP (or DEPI) tunnel.

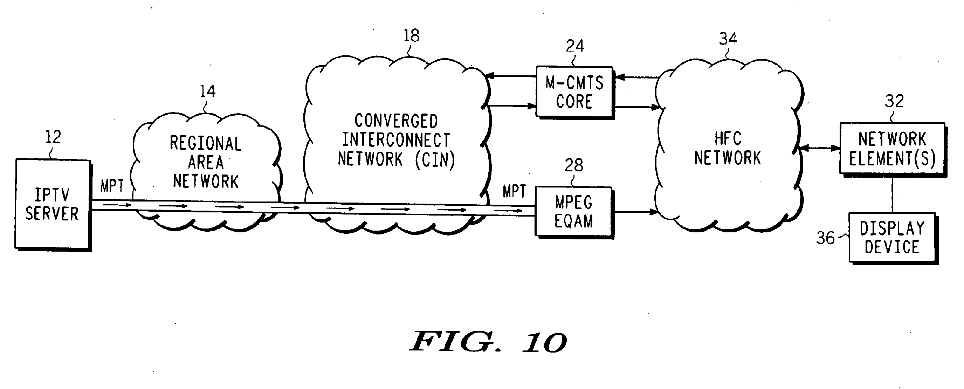

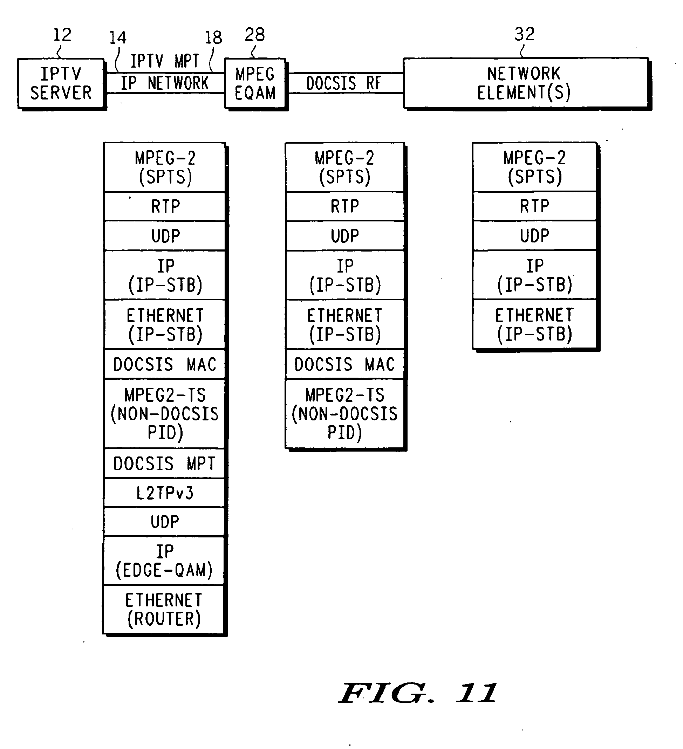

Alternatively, the IPTV server 12 can be modified to generate the complete IPTV MPT data encapsulation. Referring now to FIGs. 10 and 11, shown are a block diagram of an IPTV digital content delivery system, including M-CMTS bypass architecture, and using an MPEG Transport (MPT) data encapsulation technique (FIG. 10) and a block diagram of the corresponding data encapsulations (FIG. 11) at various stages in the IPTV digital content delivery system of FIG. 10. In this data encapsulation technique, the IPTV server 12 is modified to transmit data in an MPT format, thus no PSP/MPT converter is used, and the data packets are transmitted directly to the (modified) MPEG EQAM 28, via the network 14 and the CIN 18. The MPEG EQAM 28 terminates the L2TPv3 (DEPI) tunnel and removes the DOCSIS MPT sub-layer header from the received data. Also, the MPEG EQAM 28 removes the UDP/IP encapsulation and generates the MPEG2-TS/QAM carrier. Network elements 32, such as a cable modem can receives the DOCSIS data encapsulation and transmit the MPEG2-formatted data to a set-top box. An alternative approach to this encapsulation approach is to eliminate the L2TPv3 tunnel between the IPTV Server 12 and the MPEG EQAM 28. For example, in non-DOCSIS, non-IP digital broadcast systems, and/or in systems configured to deploy non-DOCSIS, non-IP digital broadcasts, the content can be sent from the server to the EQAM as MPEG/LJDP/IP data. The data comes out of the EQAM as an MPEG Transport Stream (no IP headers). In this manner, DOCSIS DEPI EQAMs can be modified or otherwise modified to receive content without the L2TP (or DEPI) tunnel. Also, the RTP header just below the MPEG2 SPTS often is not necessary.

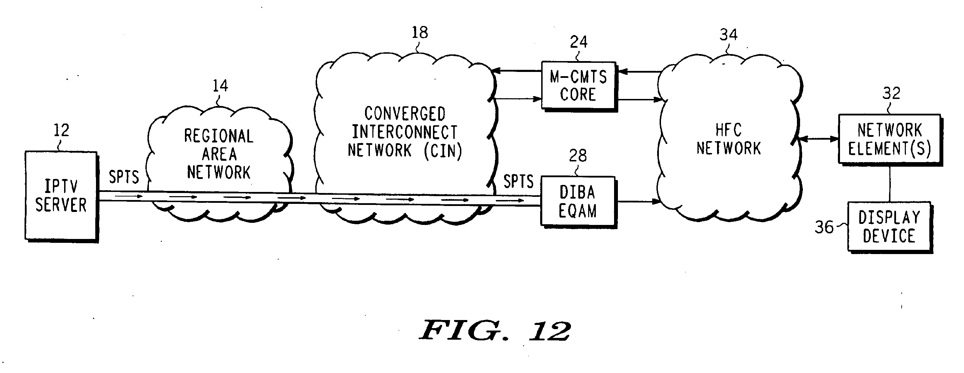

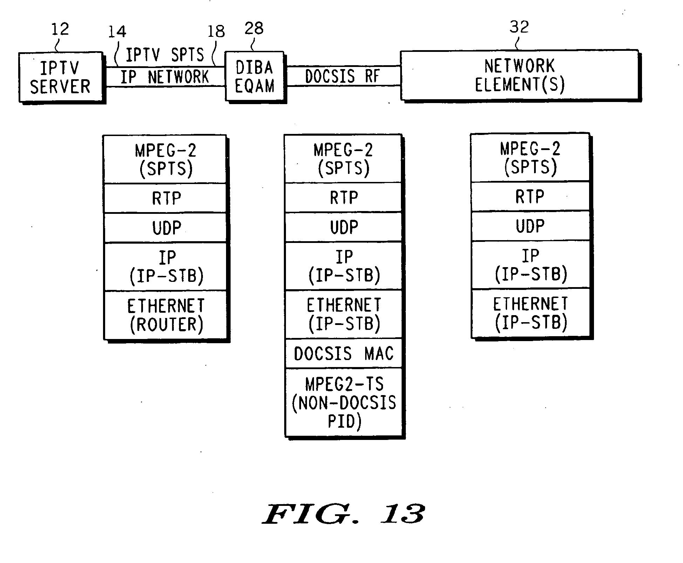

In an alternative arrangement, the EQAM 28 is a DIBA (DOCSIS IPTV Bypass Architecture) EQAM that includes additional functionality for encapsulation. Referring now to FIGs. 12 and 13, shown are a block diagram of an IPTV digital content delivery system, including M-CMTS bypass architecture, and using an alternative Single Program Transport Stream (SPTS) data encapsulation technique (FIG. 12) and a block diagram of the corresponding data encapsulations (FIG. 13) at various stages in the IPTV digital content delivery system of FIG. 12. In this data encapsulation technique, the IPTV server 12, which is not modified, transmits IPTV data in the MPEG2-TS format as an MPEG2 Single Program Transport Stream (SPTS) to the DIBA EQAM 28. The DIBA EQAM 28 includes functionality that allows the DIBA EQAM 28 to receive IPTV content formatted as an MPEG2 Single Program Transport Stream (SPTS). The DIBA EQAM 28 also is configured to add the DOCSIS MAC header as well as DOCSIS MPEG2 encapsulation to the received SPTS content. In this manner, the DIBA EQAM 28 transmits the same non-synchronized DOCSIS encapsulation data content as in many IPTV digital content delivery systems discussed hereinabove. The DOCSIS encapsulation data content transmitted from the DIBA EQAM 28 is received by the network elements 32.

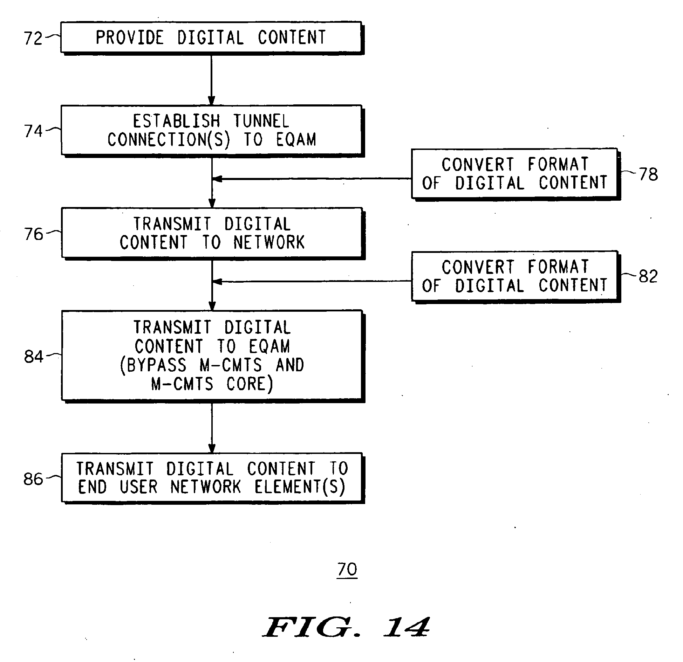

Referring now to FIG. 14, with continuing reference to FIGs. 1-13, shown is a flow chart that schematically illustrates a method 70 for delivering IPTV digital content using M-CMTS and/or integrated CMTS bypass architecture. The method 70 includes a step 72 of providing digital content, such as IPTV content. As discussed hereinabove, IPTV content is provided by any suitable IPTV content source or server 12.

The method 70 also includes a step 74 of establishing one or more connections, such as tunnel connections, from the content server 12 to the EQAM 28, e.g., via the regional area network 14 and the CIN 18. As discussed hereinabove, the connections can be special "tunnel" or "pseudo-wire" connections, such as DEPI tunnels. For example, a direct tunnel connection can be established from the content server 12 to the EQAM 28 through the regional area network 14 and the CIN 18. Alternatively, a first tunnel connection can be established between the content server 12 and the regional area network 14, and a second tunnel connection can be established between the regional area network 14 and a second the CIN 18.

The method 70 also includes a step 76 of transmitting digital content from the content source to one or more networks, e.g., using the established tunnel connection(s) therebetween. For example, the transmitting step 76 can include transmitting IPTV content from the content server 12 to the regional area network 14 and/or the CIN 18, using the established tunnel connections therebetween.

The method 70 can include a step 78 of converting the data format of the digital content prior to the content being transmitted to one or more networks and/or a step 82 of converting the data format of the digital content prior to the content being transmitted to the EQAM 28. Depending on the desired data format of the content that is transmitted to the EQAM 28, the content server 12 can be configured to convert content to one of several data formats or encapsulations. In this manner, the content server 12 performs the step 78 of converting the data format of the digital content prior to the content being transmitted to one or more networks, i.e., prior to the content server 12 transmitting the content to the regional area network 14 and the CIN 18.

Alternatively, depending on the desired data format of the content that is transmitted to the EQAM 28, one or more components located in or coupled to the CIN 18 can be configured to convert content to one of several data formats or encapsulations. For example, as discussed hereinabove, the interceptor 66 and/or the converter 68 can perform the step 82 of converting the data format of the digital content prior to the content being transmitted to the EQAM 28. In this manner, the content is converted to a data format that is suitable to be received by the EQAM 28.

The method 70 also includes a step 84 of transmitting digital content to the EQAM 28 in a manner that bypasses the M-CMTS 22, the M-CMTS core 24, or the integrated CMTS 62 that supports an external EdgeQAM. As discussed hereinabove, digital content is transmitted directly from the IPTV content server 12 to the EQAM 28, i.e., without passing through the M-CMTS 22 and the M-CMTS core 24. Bypassing the M-CMTS 22 reduces, if not eliminates, the involvement of M-CMTS components in the process of downstream content transmission and reduces the amount of CIN network switching bandwidth needed to transmit downstream content to the EQAM 28.

The method 70 also includes a step 86 of transmitting digital content from the EQAM 28 to the end user, e.g., to the network elements 32. As discussed hereinabove, content received by the EQAM 28 is formatted or encapsulated appropriately for transmission to and receipt by the network elements 32.

The CMTS bypass architecture described hereinabove is suitable for use with other IPTV digital content delivery system configurations, such as broadcast IPTV. That is, the CMTS bypass architecture described hereinabove can be used in systems that deliver broadcast video as an IP multicast. In conventional broadcast IPTV arrangements, the set-top boxes are not IP set-top boxes, so the EQAM (MPEG EQAM) joins the IP multicast group. The multicast group then is mapped to a particular QAM and PID, and it is the information as to the particular QAM and PID to which the multicast group is mapped that is forwarded to the set-top box to enable the set-top box to receive the MPEG2 video transport stream. Conventionally, because of cost, the DOCSIS format generally is not used to deliver broadcast IPTV content. However, using M-CMTS bypass architecture, providing DOCSIS bandwidth does not have to be cost prohibitive. Thus, an IP set-top box will be able to join the IP multicast group. The switched broadcast control plane determines which programs are multicast to which fiber node, consistent with the IP set-top boxes receiving which programs.

For broadcast IPTV, there are several tunneling options that are suitable for use, such as many of the tunneling configurations discussed hereinabove, including "interception," in which SPTS/UDP/IP encapsulation is intercepted by a CIN multicast router (i.e., the IPTV Interceptor 66) and encapsulated into the PSP format. Another tunneling option is the transmission of PSP data directly from the IPTV server 12 to the DEPI EQAM. For bonded IP multicast, the IPTV Interceptor 66 can include a distributor component that distributes or "stripes" the IP data packet to a pre-configured DOCSIS 3.0 Downstream Bonding Group.

Also, broadcast IPTV is possible with both DOCSIS 2.0 and 3.0 network elements, including DOCSIS 2.0 and 3.0 cable modems. In either case, the IP set-top box sends an IGMP (Internet Group Management Protocol) join instruction to an IP multicast session for a particular program. The DOCSIS 2.0 modem uses a synchronized DOCSIS downstream data channel, while a DOCSIS 3.0 modem can receive content on a bonded data channel set or a downstream channel set. It may or may not be necessary to change DOCSIS data channels to change to a new IPTV "data channel." However, any changing of DOCSIS data channels involves communication from the CMTS to the network elements in the form of a Dynamic Data channel Change (DOCSIS 2.0) or Dynamic Bonding Change (DOCSIS 3.0) instruction to change a tuner of one or more network elements to the new data channel.

The method shown in FIG. 14 may be implemented in a general, multipurpose or single purpose processor. Such a processor will execute instructions, either at the assembly, compiled or machine-level, to perform that process. Those instructions can be written by one of ordinary skill in the art following the description of FIG. 14 and stored or transmitted on a computer readable medium. The instructions may also be created using source code or any other known computer-aided design tool. A computer readable medium may be any medium capable of carrying those instructions and includes random access memory (RAM), dynamic RAM (DRAM), flash memory, read-only memory (ROM), compact disk ROM (CD-ROM), digital video disks (DVDs), magnetic disks or tapes, optical disks or other disks, silicon memory (e.g., removable, non-removable, volatile or non-volatile), packetized or non-packetized wireline or wireless transmission signals.

It will be apparent to those skilled in the art that many changes and substitutions can be made to the bypass architecture systems and methods herein described without departing from the scope of the invention as defined by the appended claims.

## Claims

1. A method for transmitting digital content from a content source (12) to a downstream modulator (28) within a system including a modular Cable Modem Termination System, M-CMTS, (22) comprising an M-CMTS core (24) coupled to at least one network (18) that is also coupled to the content source (12), and wherein the downstream modulator (28) is external to the M-CMTS core (24), is coupled to the at least one network (18) and is configured to transmit digital content to at least one end user multimedia content processing device (36) coupled to the downstream modulator (28), comprising the steps of:
providing digital content by the content source (12); and
transmitting digital content from the content source (12) to the at least one network (18); **characterised by**:
converting at least a portion of the digital content having a first format to a second format compatible with the downstream modulator (28); and
transmitting the converted at least the portion of the digital content from the content source (12) directly to the downstream modulator (28) that is external to the M-CMTS core (24) using a tunnel connection (52) from the content source (12) to the downstream modulator (28) so that the transmitted converted at least the portion of the digital content is not processed by the M-CMTS core (24).

2. The method as recited in claim 1, further comprising the step of establishing the tunnel connection (52) between the content source (12) and at least one of the network (18) and the downstream modulator (28) for the transmission of digital content therebetween.

3. The method as recited in claim 1, wherein at least one of the content transmitting steps transmits digital content using at least one Data Over Cable System Interface Specification (DOCSIS) External Physical Interface (DEPI) tunnel connection (52).

4. The method as recited in claim 1, wherein the end user multimedia content processing device (36) is selected from the group consisting of a signal converter box, a signal decoder box, a DOCSIS set-top box, an Internet Protocol Set-Top Box (IP-STB), a digital video recorder, a digital video disk recorder, a personal video recorder device, a home media server, a digital video server, a residential gateway, a video receiver and a computer.

5. The method as recited in claim 1, wherein the downstream modulator (28) further comprises an Edge Quadrature Amplitude Modulation (EQAM) modulator.

6. The method as recited in claim 1, wherein the content source (12) is an IPTV server.

7. The method as recited in claim 1, wherein the digital content is at least one of Internet Protocol (IP) video content and IP television (IPTV) content.

8. A system for transmitting digital content to a downstream modulator (28), comprising:
a content source (12);
at least one network (18) coupled to the content source (12);
at least one modular Cable Modem Termination System, M-CMTS, (22) comprising an M-CMTS core (24) coupled to the at least one network (18);
at least one downstream modulator (28) coupled to the at least one network and external to the M-CMTS core (24); and
at least one tunnel connection (52) coupled between the content source (12) and the at least one downstream modulator (28); **characterised in that**:
the content source (12) is configured to convert digital content having a first format to a second format compatible with the downstream modulator (28) and to transmit the digital content having the second format in such a way that the digital content having the second format is transmitted from the content source (12) to the downstream modulator (28) via the at least one tunnel connection (52) without being processed by the M-CMTS core (24).

9. The system as recited in claim 8, wherein the downstream modulator (28) further comprises an Edge Quadrature Amplitude Modulation (EQAM) modulator.

10. The system as recited in claim 8, wherein the downstream modulator (28) is selected from the group consisting of a Data Over Cable System Interface Specification (DOCSIS) External Physical Interface (DEPI) Edge Quadrature Amplitude Modulation (EQAM) modulator, a Moving Pictures Expert Group (MPEG) EQAM modulator and a DOCSIS IPTV Bypass Architecture (DIBA) EQAM modulator.

11. The system as recited in claim 8, wherein the at least one tunnel connection (52) further comprises a Data Over Cable System Interface Specification (DOCSIS) External Physical Interface (DEPI) tunnel connection.

12. The system as recited in claim 8, wherein the content source (12) is configured in such a way that the content source (12) transmits digital data in at least one of the Packet Stream Protocol (PSP) data format, the Single Program Transport Stream (SPTS) data format, and the Moving Pictures Expert Group (MPEG) Transport (MPT) data format.

13. The system as recited in claim 8, wherein the at least one network (18) includes a converged interconnect network (CIN).

14. The system as recited in claim 13, wherein the CIN includes an IPTV interceptor that converts digital content from the Single Program Transport Stream (SPTS) data format to the Packet Stream Protocol (PSP) data format.

15. The system as recited in claim 13, wherein the CIN includes a PSP/MPT converter that converts digital content from the Packet Stream Protocol (PSP) data format to the Moving Pictures Expert Group (MPEG) Transport (MPT) data format.

16. The system as recited in claim 8, wherein the end user multimedia content processing device (36) is selected from the group consisting of a signal converter box, a signal decoder box, a DOCSIS cable modem, an Internet Protocol Set-Top Box (IP-STB), a digital video recorder, a digital video disk recorder, a personal video recorder device, a home media server, a digital video server, a residential gateway, a video receiver and a computer.

17. The system as recited in claim 8, wherein the content source (12) is configured to transmit digital content in a Packet Stream Protocol (PSP) data format, and wherein the downstream modulator (28) is a Data Over Cable System Interface Specification (DOCSIS) External Physical Interface (DEPI) Edge Quadrature Amplitude Modulation (EQAM) modulator configured to receive data in the PSP data format.

18. The system as recited in claim 8, wherein the content source (12) is configured to transmit digital content in a Single Program Transport Stream (SPTS) data format, wherein the downstream modulator (28) is a Data Over Cable System Interface Specification (DOCSIS) External Physical Interface (DEPI) Edge Quadrature Amplitude Modulation (EQAM) modulator configured to receive data in a Packet Stream Protocol (PSP) data format, and wherein the at least one network (18) includes an interceptor configured to convert digital content from the SPTS data format to the PSP data format.

19. The system as recited in claim 8, wherein the content source (12) is configured to transmit digital content in a Packet Stream Protocol (PSP) data format, wherein the downstream modulator (28) is a Moving Pictures Expert Group (MPEG) Edge Quadrature Amplitude Modulation (EQAM) modulator configured to receive digital content in a Moving Pictures Expert Group (MPEG) Transport (MPT) data format, and wherein the at least one network (18) includes a converter configured to convert digital content from the PSP data format to the MPT data format.

20. The system as recited in claim 8, wherein the content source (12) is configured to transmit digital content in a Moving Pictures Expert Group (MPEG) Transport (MPT) data format, and wherein the downstream modulator (28) is a Moving Pictures Expert Group (MPEG) Edge Quadrature Amplitude Modulation (EQAM) modulator configured to receive digital content in a Moving Pictures Expert Group (MPEG) Transport (MPT) data format.

21. The system as recited in claim 8, wherein the content source (12) is configured to transmit digital content in a Single Program Transport Stream (SPTS) data format, and wherein the downstream modulator (28) is a DOCSIS IPTV Bypass Architecture (DIBA) Edge Quadrature Amplitude Modulation (EQAM) modulator configured to receive digital content in the SPTS data format.

## Patentansprüche

1. Ein Verfahren zum Senden digitaler Inhalte von einer Inhaltsquelle (12) an einen nachgeschalteten Modulator (28) innerhalb eines Systems, das ein Modular Cable Modem Termination System, M-CMTS, (22) einschließt, umfassend einen M-CMTS-Kern (24), der mit mindestens einem Netzwerk (18) gekoppelt ist, das ferner mit der Inhaltsquelle (12) gekoppelt ist, und wobei der nachgeschaltete Modulator (28) extern zu dem M-CMTS-Kern (24) ist, mit dem mindestens einen Netzwerk (18) gekoppelt und konfiguriert ist, digitale Inhalte an mindestens eine Endbenutzer-Verarbeitungsvorrichtung für Multimedia-Inhalte (36), die mit dem nachgeschalteten Modulator (28) gekoppelt ist, zu senden, umfassend die folgenden Schritte:
Bereitstellen digitaler Inhalte durch die Inhaltsquelle (12); und
Senden digitaler Inhalte von der Inhaltsquelle (12) an das mindestens eine Netzwerk (18); **gekennzeichnet durch**:
Umwandeln mindestens eines Teils der digitalen Inhalte, die ein erstes Format aufweisen, in ein zweites Format, das mit dem nachgeschalteten Modulator (28) kompatibel ist; und
Senden des mindestens einen umgewandelten Teils der digitalen Inhalte von der Inhaltsquelle (12) direkt an den nachgeschalteten Modulator (28), der extern zu dem M-CMTS-Kern (24) ist, unter Verwendung einer Tunnelverbindung (52) von der Inhaltsquelle (12) zu dem nachgeschalteten Modulator (28), so dass der gesendete mindestens eine umgewandelte Teil der digitalen Inhalte von dem M-CMTS-Kern (24) nicht verarbeitet wird.

2. Das Verfahren nach Anspruch 1, das ferner den Schritt des Herstellens der Tunnelverbindung (52) zwischen der Inhaltsquelle (12) und mindestens einem aus dem Netzwerk (18) und dem nachgeschalteten Modulator (28) für die Sendung der digitalen Inhalte dazwischen umfasst.

3. Das Verfahren nach Anspruch 1, wobei mindestens einer der Inhaltsendungsschritte digitale Inhalte unter Verwendung mindestens einer Data Over Cable System Interface Specification (DOCSIS) External Physical Interface (DEPI)-Tunnelverbindung (52) sendet.

4. Das Verfahren nach Anspruch 1, wobei die Endbenutzer-Verarbeitungsvorrichtung für Multimedia-Inhalte (36) aus der Gruppe ausgewählt ist, die aus einer Signalwandlerbox, einer Signaldecoderbox, einer DOCSIS Set-Top Box, einer Internet Protocol Set-Top Box (IP-STB), einem digitalen Videorecorder, einem digitalen Videodiskrecorder, einer persönlichen Videorecorder-Vorrichtung, einem Home Media Server, einem digitalen Videoserver, einem Residential Gateway, einem Videoreceiver und einem Computer besteht.

5. Das Verfahren nach Anspruch 1, wobei der nachgeschaltete Modulator (28) ferner einen Edge Quadrature Amplitude Modulation (EQAM)-Modulator umfasst.

6. Das Verfahren nach Anspruch 1, wobei die Inhaltsquelle (12) ein IPTV-Server ist.

7. Das Verfahren nach Anspruch 1, wobei die digitalen Inhalte mindestens eines aus Internet Protocol (IP)-Videoinhalten und IP-Television (IPTV)-Inhalten sind.

8. Ein System zum Senden digitaler Inhalte an einen nachgeschalteten Modulator (28), umfassend:
eine Inhaltsquelle (12);
mindestens ein Netzwerk (18), das mit der Inhaltsquelle (12) gekoppelt ist;
mindestens ein Modular Cable Modem Termination System, M-CMTS, (22), umfassend einen M-CMTS-Kern (24), der mit dem mindestens einen Netzwerk (18) gekoppelt ist;
mindestens einen nachgeschalteten Modulator (28), der mit dem mindestens einen Netzwerk gekoppelt und extern zu dem M-CMTS-Kern (24) ist; und
mindestens eine Tunnelverbindung (52), die zwischen der Inhaltsquelle (12) und dem mindestens einen nachgeschalteten Modulator (28) gekoppelt ist; **dadurch gekennzeichnet, dass**:
die Inhaltsquelle (12) konfiguriert ist, digitale Inhalte, die ein erstes Format aufweisen, in ein zweites Format, das mit dem nachgeschalteten Modulator (28) kompatibel ist, umzuwandeln und die digitalen Inhalte mit dem zweiten Format auf eine solche Art und Weise zu senden, dass die digitalen Inhalte, die das zweite Format aufweisen, von der Inhaltsquelle (12) an den nachgeschalteten Modulator (28) über die mindestens eine Tunnelverbindung (52) ohne Verarbeitung durch den M-CMTS-Kern (24) gesendet werden.

9. Das System nach Anspruch 8, wobei der nachgeschaltete Modulator (28) ferner einen Edge Quadrature Amplitude Modulation (EQAM)-Modulator umfasst.

10. Das System nach Anspruch 8, wobei der nachgeschaltete Modulator (28) aus der Gruppe ausgewählt ist, die aus einem Data Over Cable System Interface Specification (DOCSIS) External Physical Interface (DEPI) Edge Quadrature Amplitude Modulation (EQAM)-Modulator, einem Moving Pictures Expert Group (MPEG) EQAM-Modulator und einem DOCSIS IPTV Bypass Architecture (DIBA) EQAM-Modulator besteht.

11. Das System nach Anspruch 8, wobei die mindestens eine Tunnelverbindung (52) ferner eine Data Over Cable System Interface Specification (DOCSIS) External Physical Interface (DEPI)-Tunnelverbindung umfasst.

12. Das System nach Anspruch 8, wobei die Inhaltsquelle (12) auf eine solche Art und Weise konfiguriert ist, dass die Inhaltsquelle (12) digitale Daten in mindestens einem aus dem Packet Stream Protocol (PSP)-Datenformat, dem Single Program Transport Stream (SPTS)-Datenformat und dem Moving Pictures Expert Group (MPEG) Transport (MPT)-Datenformat sendet.

13. Das System nach Anspruch 8, wobei das mindestens eine Netzwerk (18) ein Converged Interconnect Network (CIN) einschließt.

14. Das System nach Anspruch 13, wobei das CIN einen IPTV-Interceptor einschließt, der digitale Inhalte aus dem Single Program Transport Stream (SPTS)-Datenformat in das Packet Stream Protocol (PSP)-Datenformat umwandelt.

15. Das System nach Anspruch 13, wobei das CIN einen PSP/MPT-Wandler einschließt, der digitale Inhalte aus dem Packet Stream Protocol (PSP)-Datenformat in das Moving Pictures Expert Group (MPEG) Transport (MPT)-Datenformat umwandelt.

16. Das System nach Anspruch 8, wobei die Endbenutzer-Verarbeitungsvorrichtung für Multimedia-Inhalte (36) aus der Gruppe ausgewählt ist, die aus einer Signalwandlerbox, einer Signaldecoderbox, einem DOCSIS-Kabelmodem, einer Internet Protocol Set-Top Box (IP-STB), einem digitalen Videorecorder, einem digitalen Videodiskrecorder, einer persönlichen Videorecorder-Vorrichtung, einem Home Media Server, einem digitalen Videoserver, einem Residential Gateway, einem Videoreceiver und einem Computer besteht.

17. Das System nach Anspruch 8, wobei die Inhaltsquelle (12) konfiguriert ist, digitale Inhalte in einem Packet Stream Protocol (PSP)-Datenformat zu senden, und wobei der nachgeschaltete Modulator (28) ein Data Over Cable System Interface Specification (DOCSIS) External Physical Interface (DEPI) Edge Quadrature Amplitude Modulation (EQAM)-Modulator ist, der konfiguriert ist, Daten in dem PSP-Datenformat zu empfangen.

18. Das System nach Anspruch 8, wobei die Inhaltsquelle (12) konfiguriert ist, digitale Inhalte in einem Single Program Transport Stream (SPTS)-Datenformat zu senden, wobei der nachgeschaltete Modulator (28) ein Data Over Cable System Interface Specification (DOCSIS) External Physical Interface (DEPI) Edge Quadrature Amplitude Modulation (EQAM)-Modulator ist, der konfiguriert ist, Daten in einem Packet Stream Protocol (PSP)-Datenformat zu empfangen, und wobei das mindestens eine Netzwerk (18) einen Interceptor einschließt, der konfiguriert ist, digitale Inhalte aus dem SPTS-Datenformat in das PSP-Datenformat umzuwandeln.

19. Das System nach Anspruch 8, wobei die Inhaltsquelle (12) konfiguriert ist, digitale Inhalte in einem Packet Stream Protocol (PSP)-Datenformat zu senden, wobei der nachgeschaltete Modulator (28) ein Moving Pictures Expert Group (MPEG) Edge Quadrature Amplitude Modulation (EQAM)-Modulator ist, der konfiguriert ist, digitale Inhalte in einem Moving Pictures Expert Group (MPEG) Transport (MPT)-Datenformat zu empfangen, und wobei das mindestens eine Netzwerk (18) einen Wandler einschließt, der konfiguriert ist, digitale Inhalte aus dem PSP-Datenformat in das MPT-Datenformat umzuwandeln.

20. Das System nach Anspruch 8, wobei die Inhaltsquelle (12) konfiguriert ist, digitale Inhalte in einem Moving Pictures Expert Group (MPEG) Transport (MPT)-Datenformat zu senden, und wobei der nachgeschaltete Modulator (28) ein Moving Pictures Expert Group (MPEG) Edge Quadrature Amplitude Modulation (EQAM)-Modulator ist, der konfiguriert ist, digitale Inhalte in einem Moving Pictures Expert Group (MPEG) Transport (MPT)-Datenformat zu empfangen.

21. Das System nach Anspruch 8, wobei die Inhaltsquelle (12) konfiguriert ist, digitale Inhalte in einem Single Program Transport Stream (SPTS)-Datenformat zu senden, und wobei der nachgeschaltete Modulator (28) ein DOCSIS IPTV Bypass Architecture (DIBA) Edge Quadrature Amplitude Modulation (EQAM)-Modulator ist, der konfiguriert ist, digitale Inhalte in dem SPTS-Datenformat zu empfangen.

## Revendications

1. Procédé de transmission d'un contenu numérique d'une source de contenu (12) à un modulateur aval (28) dans un système comprenant un système de terminaison de modem câble modulaire, M-CMTS, (22) comprenant un coeur M-CMTS (24) couplé à au moins un réseau (18) qui est également couplé à la source de contenu (12), et dans lequel le modulateur aval (28) est externe au coeur M-CMTS (24), est couplé à l'au moins un réseau (18) et est configuré pour transmettre un contenu numérique à au moins un dispositif de traitement de contenu multimédia d'utilisateur final (36) couplé au modulateur aval (28), lequel procédé comprend les étapes de :
fourniture d'un contenu numérique par la source de contenu (12) ; et
transmission du contenu numérique de la source de contenu (12) à l'au moins un réseau (18) ; **caractérisé par** :
la conversion d'au moins une partie du contenu numérique ayant un premier format en un second format compatible avec le modulateur aval (28) ; et
la transmission de la au moins une partie convertie du contenu numérique de la source de contenu (12) directement au modulateur aval (28) qui est externe au coeur M-CMTS (24) à l'aide d'une connexion tunnel (52) de la source de contenu (12) au modulateur aval (28), de telle sorte que la au moins une partie convertie transmise du contenu numérique n'est pas traitée par le coeur M-CMTS (24).

2. Procédé selon la revendication 1, comprenant en outre l'étape d'établissement de la connexion tunnel (52) entre la source de contenu (12) et au moins l'un parmi le réseau (18) et le modulateur aval (28) pour la transmission d'un contenu numérique entre eux.

3. Procédé selon la revendication 1, dans lequel au moins l'une des étapes de transmission de contenu transmet un contenu numérique à l'aide d'au moins une connexion tunnel (52) d'interface physique externe (DEPI) de spécification d'interface pour des systèmes de transmission de données par câble (DOCSIS).

4. Procédé selon la revendication 1, dans lequel le dispositif de traitement de contenu multimédia d'utilisateur final (36) est sélectionné à partir du groupe constitué d'un boîtier convertisseur de signal, d'un boîtier décodeur de signal, d'un boîtier numérique DOCSIS, d'un boîtier numérique à protocole Internet (IP-STB), d'un enregistreur vidéo numérique, d'un enregistreur sur vidéodisque numérique, d'un dispositif enregistreur vidéo personnel, d'un serveur multimédia domestique, d'un serveur vidéo numérique, d'une passerelle résidentielle, d'un récepteur vidéo et d'un ordinateur.

5. Procédé selon la revendication 1, dans lequel le modulateur aval (28) comprend en outre un modulateur à modulation d'amplitude en quadrature de périphérie (EQAM).

6. Procédé selon la revendication 1, dans lequel la source de contenu (12) est un serveur IPTV.

7. Procédé selon la revendication 1, dans lequel le contenu numérique est au moins l'un parmi un contenu vidéo sur Protocole Internet (IP) et un contenu de télévision sur Protocole Internet (IP) (IPTV).

8. Système de transmission d'un contenu numérique à un modulateur aval (28), comprenant :
une source de contenu (12) ;
au moins un réseau (18) couplé à la source de contenu (12) ;
au moins un système de terminaison de modem câble modulaire, M-CMTS, (22) comprenant un coeur M-CMTS (24) couplé à l'au moins un réseau (18) ;
au moins un modulateur aval (28) couplé à l'au moins un réseau et externe au coeur M-CMTS (24) ; et
au moins une connexion tunnel (52) couplée entre la source de contenu (12) et l'au moins un modulateur aval (28) ; **caractérisé en ce que** :
la source de contenu (12) est configurée pour convertir un contenu numérique ayant un premier format en un second format compatible avec le modulateur aval (28) et pour transmettre le contenu numérique ayant le second format, de telle sorte que le contenu numérique ayant le second format est transmis de la source de contenu (12) au modulateur aval (28) par l'intermédiaire de la au moins une connexion tunnel (52) sans être traité par le coeur M-CMTS (24).

9. Système selon la revendication 8, dans lequel le modulateur aval (28) comprend en outre un modulateur à modulation d'amplitude en quadrature de périphérie (EQAM).

10. Système selon la revendication 8, dans lequel le modulateur aval (28) est sélectionné à partir du groupe constitué d'un modulateur à modulation d'amplitude en quadrature de périphérie (EQAM) d'interface physique externe (DEPI) de spécification d'interface pour des systèmes de transmission de données par câble (DOCSIS), d'un modulateur EQAM de groupe d'experts d'images animées (MPEG) et d'un modulateur EQAM d'architecture de dérivation DOCSIS IPTV (DIBA).

11. Système selon la revendication 8, dans lequel la au moins une connexion tunnel (52) comprend en outre une connexion tunnel d'interface physique externe (DEPI) de spécification d'interface pour des systèmes de transmission de données par câble (DOCSIS).

12. Système selon la revendication 8, dans lequel la source de contenu (12) est configurée de telle sorte que la source de contenu (12) transmet des données numériques dans au moins l'un parmi le format de données de protocole de flux de paquets (PSP), le format de données de flux de transport de programme unique (SPTS), et le format de données de transport du groupe d'experts d'images animées (MPEG) (MPT).

13. Système selon la revendication 8, dans lequel l'au moins un réseau (18) comprend un réseau d'interconnexion à convergence (CIN).

14. Système selon la revendication 13, dans lequel le CIN comprend un intercepteur IPTV qui convertit un contenu numérique du format de données de flux de transport de programme unique (SPTS) en format de données de protocole de flux de paquets (PSP).

15. Système selon la revendication 13, dans lequel le CIN comprend un convertisseur PSP/MPT qui convertit un contenu numérique du format de données de protocole de flux de paquets (PSP) en format de données de transport de groupe d'experts d'images animées (MPEG) (MPT).

16. Système selon la revendication 8, dans lequel le dispositif de traitement de contenu multimédia d'utilisateur final (36) est sélectionné à partir du groupe constitué d'un boîtier convertisseur de signal, d'un boîtier décodeur de signal, d'un modem câble DOCSIS, d'un boîtier numérique à protocole Internet (IP-STB), d'un enregistreur vidéo numérique, d'un enregistreur sur vidéodisque numérique, d'un dispositif enregistreur vidéo personnel, d'un serveur multimédia domestique, d'un serveur vidéo numérique, d'une passerelle résidentielle, d'un récepteur vidéo et d'un ordinateur.

17. Système selon la revendication 8, dans lequel la source de contenu (12) est configurée pour transmettre un contenu numérique dans un format de données de protocole de flux de paquets (PSP), et dans lequel le modulateur aval (28) est un modulateur à modulation d'amplitude en quadrature de périphérie (EQAM) d'interface physique externe (DEPI) de spécification d'interface pour des systèmes de transmission de données par câble (DOCSIS) configuré pour recevoir des données dans le format de données PSP.

18. Système selon la revendication 8, dans lequel la source de contenu (12) est configurée pour transmettre un contenu numérique dans un format de données de flux de transport de programme unique (SPTS), dans lequel le modulateur aval (28) est un modulateur à modulation d'amplitude en quadrature de périphérie (EQAM) d'interface physique externe (DEPI) de spécification d'interface pour des systèmes de transmission de données par câble (DOCSIS) configuré pour recevoir des données dans un format de données de protocole de flux de paquets (PSP), et dans lequel l'au moins un réseau (18) comprend un intercepteur configuré pour convertir un contenu numérique du format de données SPTS en format de données PSP.

19. Système selon la revendication 8, dans lequel la source de contenu (12) est configurée pour transmettre un contenu numérique dans un format de données de protocole de flux de paquets (PSP), dans lequel le modulateur aval (28) est un modulateur à modulation d'amplitude en quadrature de périphérie (EQAM) de groupe d'experts d'images animées (MPEG) configuré pour recevoir un contenu numérique dans un format de données de transport de groupe d'experts d'images animées (MPEG) (MPT), et dans lequel l'au moins un réseau (18) comprend un convertisseur configuré pour convertir un contenu numérique du format de données PSP en format de données MPT.

20. Système selon la revendication 8, dans lequel la source de contenu (12) est configurée pour transmettre un contenu numérique dans un format de données de transport de groupe d'experts d'images animées (MPEG) (MPT), et dans lequel le modulateur aval (28) est un modulateur à modulation d'amplitude en quadrature de périphérie (EQAM) de groupe d'experts d'images animées (MPEG) configuré pour recevoir un contenu numérique dans un format de données de transport de groupe d'experts d'images animées (MPEG) (MPT).

21. Système selon la revendication 8, dans lequel la source de contenu (12) est configurée pour transmettre un contenu numérique dans un format de données de flux de transport de programme unique (SPTS), et dans lequel le modulateur aval (28) est un modulateur à modulation d'amplitude en quadrature de périphérie (EQAM) d'architecture de dérivation DOCSIS IPTV (DIBA) configuré pour recevoir un contenu numérique dans le format de données SPTS.
